# EUROPEAN PATENT APPLICATION

(11) **EP 4 575 415 A1**
(43) Date of publication of application: **25.06.2025**
(21) Application number: 23218873.0
(22) Date of filing: 20.12.2023
(51) Int. Cl.: G01D 5/353

(54) **DISTRIBUTED SENSING SYSTEM PROVIDING COHERENT DETECTION**

(71) Applicant: AiQ Dienstleistungen UG (haftungsbeschränkt), 71034 Böblingen (DE)
(72) Inventor: Jostmeier, Thorben, 48249 Dülmen (DE); Hill, Wieland, 51519 Odenthal (DE)
(74) Representative: Dilg, Haeusler, Schindelmann Patentanwaltsgesellschaft mbH

(57) **Abstract**

It is provided a distributed sensing system (100), comprising: a light source (101), in particular Laser source, for providing a primary radiation (102); a primary radiation splitter (103) arranged to receive the primary radiation (102) at an input port (104) and provide at least one injection radiation (105), a first reference radiation (106_1) and a second reference radiation (106_2) at at least three output ports (108_1, 108_2, 108_3); one or more optical fibres (109, 109a) arrangeable to receive a respective fibre input radiation portion (120a) which is derived from the injection radiation (105); a light combining system (110) configured, in particular for every one of the one or more optical fibres (109), to receive backscatter light (111a) returned from the one or more optical fibres, or light (111a_1, 111a_2) derived from the backscatter light (111a), to receive the first reference radiation (106_1) or light derived from the first reference radiation, and in particular to receive the second reference radiation (106_2) or light derived from the second reference radiation, as light combining system radiation inputs (112) and provide one or more light combining system radiation outputs (113) based on the light combining system radiation inputs; a detection system (114) configured to detect the one or more light combining system radiation outputs (113), thereby providing coherent detection.

## Description

### Field of invention

The present invention relates to a distributed sensing system and a respective method of performing distributed sensing, wherein coherent detection is provided. In particular, the present invention relates to a distributed acoustic sensing system and a distributed temperature sensing system and a distributed strain sensing system each providing coherent detection. Furthermore, the present invention relates to multi-channel distributed sensing systems providing coherent detection.

### Art Background

US 11,469,816 B2 discloses a distributed sensing apparatus based on optical time domain reflectometry (OTDR). An optical splitter being in optical communication with an optical source has first and second outputs, a sensing fibre being in optical communication with the first output of the optical splitter. A combining unit combines a reference signal derived from the second output of the optical splitter with a backscattered signal derived from the sensing fibre. The combining unit comprises one or more 3x3 fused fibre couplers. The combining unit comprises a polarisation diversity arrangement and is configured to align, in the combining unit, the polarisation of a first signal derived from the backscattered signal with that of a first signal derived from the reference signal which is derived from the second output of the optical splitter. Further, the polarisation of a second signal derived from the backscattered signal with that of a second signal derived from the reference signal (which is derived from the second output of the optical splitter) is aligned. In order to derive a first signal and respectively a second signal from the reference signal, this document utilizes a separate polarisation beam splitter which receives the reference signal from the optical splitter. Thereby, the disclosed system has high complexity and requires multiple optical elements.

The patent EP 2 816 323 B1 discloses polarisation-diverse coherent detection for distributed acoustic sensing analysing acoustic pressure.

It has been observed that a conventional distributed sensing system is very complex, requires a lot of components, involving high material costs and manufacturing efforts.

Thus, there may be a need for a distributed sensing system and a respective method for performing distributed sensing, wherein coherent detection is enabled while reducing the complexity of the system, reducing number of components or material cost and manufacturing efforts.

### Summary of the Invention

This need may be met by the subject matter according to the independent claims. Advantageous embodiments of the present invention are described by the dependent claims.

According to an embodiment of the present invention, a distributed sensing system according to claim 1 is provided. The distributed sensing system comprises a light source, in particular laser source, for providing a primary radiation; a primary radiation splitter arranged to receive the primary radiation at an input port and provide at least one injection radiation, a first reference radiation and a second reference radiation at at least three output ports; one or more optical fibres arrangeable to receive a respective fibre input radiation portion which is derived from the injection radiation; a light combining system configured, in particular for every one of the one or more optical fibres, to receive backscatter light returned from the one or more optical fibres, or light derived from the backscatter light, to receive the first reference radiation or light derived from the first reference radiation, and in particular to receive the second reference radiation or light derived from the second reference radiation, as light combining system radiation inputs and provide one or more light combining system radiation outputs based on the light combining system radiation inputs; a detection system configured to detect the one or more light combining system radiation outputs, thereby providing coherent detection.

The light source may provide and/or generate coherent electromagnetic radiation, for example having a coherence length between 10 m and more than 100 km. The primary radiation may consist or comprise light in the near-infrared spectral region or in the visible optical region. The primary radiation may or may not have a defined polarisation state. The light source may be configured to provide primary radiation having adjustable wavelength/frequency and/or adjustable polarisation state. For example, the light source may generate or provide primary radiation having substantially constant wavelength not changing with time, stepped wavelengths or a continuously variable (chirped) wavelength. (For performing distributed temperature sensing, the light source may be configured to provide primary radiation which may have different adjustable wavelengths depending on the circumstances or requirements.)

The primary radiation splitter may be in optical communication with the light source by an optical fibre or optical waveguide and/or by free space optical paths. The primary radiation splitter may receive light which is based on the primary radiation. Between the light source and the primary radiation splitter, there may be or there do not need to be one or more further optical components, as is required. Optional optical components may for example include collimation optics, and/or isolator and/or filter and/or an optical fibre.

The primary radiation splitter may be or may consist of one or more only one optical device or components, for example optical elements or devices which are in optical communication with each other by for example intermediate optical fibres or free space optical paths. The primary radiation splitter may or may not be a hybrid system comprising solid components and free space radiation paths.

The primary radiation splitter may be configured as a fibre coupler optically coupling the at least one input port with the at least three output ports.

The primary radiation splitter may be configured as a fused fibre coupler different from a system of optical elements or devices which are in optical communication with each other by for example intermediate optical fibres or free space optical paths. The fused fibre coupler may provide the optical communication between the at least one input port with the at least three output ports by providing optical radiation paths through continuous (integrally formed) fibre material (excluding travel through air) e.g. having no (larger) discontinuities in the refractive index along the fiber axis, e.g. having no interfaces between air and the light-guiding fibre material. For manufacturing the fused fibre coupler, at least three fibres may be partially uncoated, heated above the softening point and/or twisted and/or stretched and/or connected or fused together, cooled down and/or recoated. In the fused region, interaction of radiation with the different cores leads to a transfer of radiation between cores. Length of the interaction region and distance of cores may be adjusted to achieve the desired power rations in the output fibers. The primary radiation splitter may be a fused fibre optic coupler or may be configured as a fused fibre optic coupler, for example providing the splitting functionality by a single fused optical structure.

The primary radiation splitter may not be composed or does not comprise for example plural splitters which are arranged in a cascade. The primary radiation splitter may have exactly one used input port and may have three or more output ports.

Each one of the at least one injection radiation may be provided as input to a respective modulator. According to one embodiment, only one injection radiation is provided at an output port of the primary radiation splitter which is then provided to exactly one optical modulator. In other embodiments, one or more further injection radiations are provided at further output ports of the primary radiation splitter and those further injection radiations are provided or supplied to one or more further modulators.

The primary radiation splitter may have even or uneven splitting characteristics or splitting ratio which may be adjusted or selected depending on the application.

Thus, the relative light powers of the at least one injection radiation, the first reference radiation and the second reference radiation may be different or may be equal. For example, the respective power ratios for the different output radiations may be adjusted such that a desired or demanded launch pulse power (power levels downstream the modulator which may contain an amplifier) or power of the fibre input radiation is injected into the one or more optical fibres, for example in order to achieve a satisfactory or optimum signal-to-noise performance and/or a desired or demanded light power into the modulator, For example, to achieve optimum modulation and/or amplification.

The one or more optical fibres may be in direct or indirect optical communication with the primary radiation splitter, in particular the output port which outputs the injection radiation. The respective fibre input radiation portion may be derived from the injection radiation by for example passing through a modulator and/or passing through one or more further radiation splitters being for example arranged between the primary radiation splitter and the respective modulator or between the modulator and the respective optical fibre.

The one or more optical fibres may or may not be part of the distributed sensing system. The distributed sensing system may at least provide for an optical fibre connection port at which an optical fibre can be connected. The optical fibre connection port of the system may allow to inject the respective fibre input radiation portion into the connected fibre. Further, the optical fibre connection port may allow to receive backscatter light from the optical fibre.

The light combining system may enable to provide coherent detection by the detection system. The distributed sensing system may be configured to provide coherent detection with or without polarisation-diverse detection for one or plural optical fibres. The backscatter light may include Rayleigh backscatter light and/or Brillouin backscatter light and/or Raman backscatter light which may be generated within the respective optical fibre due to the injection of the respective fibre input radiation portion. The backscatter light may be dependent on a (temporal change of) a refractive index of the optical fibre which may in turn be dependent on strain, acoustic disturbance and/or temperature of the optical fibre.

The backscatter light may then optionally be split or divided with respect to its polarisation state, in order for example to obtain light which is derived from the backscatter light. Thus, the light combining system may be configured, in particular for every one of the one or more optical fibres, to receive light which is based on the backscatter light returned from the respective optical fibre. Furthermore, the light combining system may receive light which is based on the first reference radiation and also light which is based on the second reference radiation.

For example, between the primary radiation splitter and the light combining system, one or more further light splitting or dividing elements may be arranged. In other embodiments, disregarding any optical waveguide or optical connection fibre, no other optical element or splitting device may be arranged between the primary radiation splitter and the light combining system.

The light combining system may comprise one or more optical components which may be configured to combine at least two light portions and/or which are configured to provide or achieve splitting or dividing the combined lights, depending on the application, as will be described in more detail below. For example, for polarisation-diverse coherent detection of backscatter light from one optical fibre, the light combining system may comprise four input ports and two, four or six output ports, depending on the manner of detection. For example, for providing polarisation-diverse coherent detection of backscatter light from two optical fibres, the light combining system may comprise eight input ports, and four or eight or twelve output ports. For example, for coherent non-polarisation diverse detection of N optical fibres, the light combining system may comprise 2xN input ports and N or 2N or 3N output ports.

The detection system may comprise one or more radiation light or backscatter light sensitive devices or elements, such as photo diodes. The detection system may be configured to detect (an intensity of) the one or more light combining system radiation outputs separately. Thereby, coherent detection, in particular polarisation-diverse coherent detection, for one or more optical fibres may be provided in a simple and non-complex implementation.

The distributed sensing system may in particular be configured to switch between a coherent non-polarisation diverse detection to a coherent polarisation-diverse detection. For example, the system may be configured to provide polarisation-diverse coherent detection for zero or one or more of the one or more optical fibres and may be configured to provide non-polarisation-diverse coherent detection for the remaining of the one or more optical fibres. Thereby, flexibility may be increased depending for example on monitoring requirements.

The distributed sensing system may be configured to perform optical time domain reflectometry (OTDR) or coherent optical time domain reflectrometry (COTDR). According to other embodiments, the distributed sensing system may be configured to provide a Brillouin optical time domain analyzer (BOTDA) or optical frequency domain reflectrometry (OFDR). Or it may be configured for fiber bragg gratings (FBG) or other reflector sources in the fibre.

The light source may be fibre-coupled to downstream elements. The at least one injection radiation may, in particular using a modulator, be modulated in amplitude and/or frequency and/or phase and/or polarization and then a respective fibre input radiation portion may be injected into the respective sensing optical fibre. Due to light-matter interactions in the optical fibre backscatter signals or backscatter light may evolve. Due to the environment at different locations of the optical fibre properties of the backscatter may change. The distributed sensing system may detect the one or more light combining system radiation outputs in a time resolved manner enabling, due to time-of-flight considerations, to provide location sensitive or spatially resolved distributed sensing.

In OFDR, the frequency-dependend response of the fibre may be converted into time-domain using Fourier transformation.

Coherent detection in the sense of the present application may involve detecting light or radiation representing a combination or a mixing or an interference of backscatter light with reference radiation. In the case of polarisation-diverse coherent detection, at least two polarisation components of the backscatter light are combined or mixed or interfered with reference radiation portions and detected separately. According to embodiments of the present invention, more than two polarisation components of the backscatter light may be considered, and they may be interfered or mixed or combined with respective radiation portions and may be separately detected.

Conventionally, a primary radiation splitter having at least three output ports was not known. Instead, conventionally, a laser output has been split by a 1x2 coupler and this signal may have been split again by an additional 1x2 coupler to provide reference radiation for two different polarisation directions.

According to embodiments of the present invention, a 1x3 coupler downstream the light source may split the primary radiation into (exactly) three radiation portions. The splitting ratio of the 1x3 coupler may be uneven and can be chosen in a way that generated appropriate optical power levels for the pulse creation or modulation and the desired local oscillator (reference radiation) power level at the photo diodes, are e.g., 20:40:40% or 60:20:20%. The power level required for the pulse generation may depend on the amplification gain of the pulse generator, where a launch pulse power of 100 to 500 mW for each sensor fibre channel may be needed to be generated for optimum or satisfactory signal-to-noise performance. The power level for each photodetector (for example comprised in the detecting system) may depend on the maximum current load of the receivers and the power level required to minimize signal noise, for example power levels in the range of less than 1 to 5 mW may be used for each detector.

For a DAS (distributed acoustic sensing) (or OTDR) with two parallel interrogated sensor fibres using a single light source, in particular single laser, a 1x5 coupler can be used to split the laser light into one signal for the pulse generation and four signals for two receiver paths for each fibre.

Compared to the conventional apparatuses or methods, according to embodiments of the present invention, less fibre optical splitters are required to provide the two or four local oscillator signals required for polarisation-diverse coherent detection for one or two sensor fibre channels. Thereby, material cost, manufacturing efforts and complexity of the system may be reduced. According to other embodiments, the primary radiation splitter may be configured or comprise a 1xN or 1xM coupler, for example to create more local oscillator signals for multi-fibre channel schemes or for multiple pulse generation sections that create different pulse configuration for different sensing fibres.

Embodiments of the present invention provide a distributed fibre optic sensor (DFOS) system. DFOS may be implemented in different manners, e.g. OTDR, OFDR, etc. for sensing acoustics and/or strain and/or temperature.

The DFOS may use for example a single laser source and a coherent detection scheme where multiple backscatter signals are mixed with multiple local oscillator signals (reference radiation signals). Plural backscatter signals can be created by multiple sensor fibres and/or by polarisation splitting for polarisation-diverse detection. The coherent detection can be homodyne, i.e., without intermediate frequency (IF) between backscattering and local oscillator or heterodyne, i.e., with intermediate frequency. Mixing and detection of backscatter and local oscillator can be performed using 2x1 couplers, 2x2 couplers, 2x3 couplers, 3x3 couplers, single photo diodes or balanced photo diodes.

1x2 couplers or 2x3 couplers may be implemented with 2x2 or 3x3 couplers, respectively, where one input port (or fibre) or one output port (or fibre) it not provided or not used.

Embodiments of the present invention provide a distributed acoustic sensing (DAS) and/or Brillouin optical time domain reflectometry (BOTDR). In heterodyne DAS or BOTDR, one laser source may be utilized and optionally an additional component (e.g., AOM) may create a frequency shift between backscattering and local oscillator (intermediate frequency for heterodyne coherent detection).

According to an embodiment of the present invention, the distributed sensing system further comprises in particular for at least one or for every one of the one or more optical fibres: a respective polarisation splitting device arranged to receive the backscatter light from the respective fibre and to provide at least a first polarisation component and a second polarisation component of the respective backscatter light at outputs for light combining system radiation inputs.

The polarisation splitting device (in particular for every one of the one or more optical fibres) may not be comprised in the light combining system but may be a respective component outside the combining system but which may provide input to the light combining system. The first and second polarisation components of the backscatter light may for example be polarisation components being perpendicular to each other. In other embodiments, the polarisation splitting device may provide more than two polarisation components, such as three, four, five or even a higher number of different polarisation components, depending on the application.

The polarisation splitting device may substantially be configured as a fibre-optic polarisation beam splitter. A polarisation beam splitter (PBS) may be considered as a single optical component (e.g. including optically anisotropic material, e.g. birefringent (or birefractive) material) which performs the splitting of input radiation to at least to output radiation portions which are differently polarized, in particular having polarisation directions being substantially perpendicular to each other.

In other embodiments, the polarisation splitting device may comprise one or more components or units, for example a unit which merely splits the light (in two or more portions) and one or more components which only polarizes light portions for example output by the splitting element.

By employing the polarisation splitting device (in particular for every one of the one or more optical fibres), thereby polarisation-diverse coherent detection may be enabled.

According to an embodiment of the present invention, the light combining system is configured, in particular in case the system comprises exactly one optical fibre: to receive the first polarisation component of the respective backscatter light and the first reference radiation, and provide a first light combining system radiation output based on the first polarisation component of the respective backscatter light and the first reference radiation; to receive the second polarisation component of the respective backscatter light and the second reference radiation, and provide a second light combining system radiation output based on the second polarisation component of the respective backscatter light and the second reference radiation; wherein the detection system is configured to detect the first light combining system radiation output and the second light combining system radiation output separately.

In this case, the light combining system thereby receives four input radiation portions. The first and the second polarisation component of the respective backscatter light may thereby be output by the polarisation splitting device which is associated or provided for the respective optical sensing fibre. Thereby, polarisation-diverse coherent detection of radiation returning from a single optical fibre may be provided in a simple and cost-effective manner.

According to an embodiment of the present invention, the system further comprises at least one modulator configured to receive one of the at least one injection radiation and provide fibre input radiation, the modulator in particular being configured to modulate the injection radiation with respect to amplitude and/or frequency and/or phase and/or forming a pulse pattern and/or forming temporary intensity and/or phase and/or frequency and/or polarisation profile, in order to obtain the fibre input radiation, wherein for at least one or for every fibre the respective fibre input radiation portion is derived from the fibre input radiation.

According to an embodiment, only one modulator may be provided which provides fibre input radiation from which the respective fibre input radiation portion for each of the one or more optical fibres is derived. Embodiments of the present invention, however, also support that more than one modulator is present which potentially provides differently modulated fibre input radiation (e.g. including pulse patterns having different characteristic) for different groups or different sets of optical sensing fibres. Thereby, the fibre input radiation portions for the particular one or more optical fibres may be designed and configured as required by the particular application.

According to an embodiment of the present invention, the sensing system further comprises in particular in case the system comprises plural optical fibres: a fibre input radiation splitter, in particular 1xN splitter for N fibres, configured to receive the fibre input radiation and to output for the plural optical fibres a respective fibre input radiation portion.

The fibre input radiation splitter may be configured as a single optical device (e.g. fused fibre coupler) or unit or comprise different components, for example splitters in a cascade, depending on the application. Thereby multi-channel distributed sensing may be enabled. In case more than one modulator is provided, downstream each of the modulators, an associated fibre input radiation splitter may be arranged, such that the distributed sensing system may comprise plural fibre input radiation splitters, for example arranged downstream the one or more modulators.

According to an embodiment of the present invention, the primary radiation splitter has as many output ports in order to provide for at least one or for every fibre one reference radiation portion or a first reference radiation portion and a second reference radiation portion and at least one injection radiation, and/or wherein the primary radiation splitter comprises a 1xM coupler, wherein M >= 3.

The primary radiation splitter may be configured as required by the application and depending on whether polarisation-diverse detection is required or not. When the primary radiation splitter is configured as a 1xM coupler (e.g. fused 1xM fibre coupler), a commercially available optical element can be utilized for implementation and furthermore manufacturing costs may be reduced and complexity may be reduced. Furthermore, optical losses may be reduced using a 1×M coupler where M ≥ 3 compared to conventionally utilized splitting arrangements.

According to an embodiment of the present invention, the system further comprises one or more further primary radiation splitters, in particular 1x2 splitters (e.g. fused couplers), arranged downstream or upstream the primary radiation splitter in one or more stages or in a cascade receiving input from or providing input to the primary radiation splitter, thereby providing a primary radiation splitting system having as many output ports in order to provide for every fibre one reference radiation portion or a first reference radiation portion and a second reference radiation portion as light combining system radiation inputs.

With the one or more further primary radiation splitters is provided, the number of radiation portions which are output may be adapted depending on the application and in particular thereby more optical sensing fibres may be supported.

According to an embodiment of the present invention, the light combining system is configured, for every one of plural optical fibres for which a first reference radiation portion and a second reference radiation portion are provided: to receive the first polarisation component of the respective backscatter light and the first reference radiation portion, and provide a first light combining system radiation output based on the first polarisation component and the first reference radiation portion; to receive the second polarisation component of the respective backscatter light and the second reference radiation portion, and provide a second light combining system radiation output based on the second polarisation component and the second reference radiation portion; wherein the detection system is configured to detect the first light combining system radiation output and the second light combining system radiation output separately.

Thereby, polarisation-diverse coherent detection is enabled for one or more optical fibres. According to other embodiments, more than two different polarisation components may be interfered or combined with respective reference radiation portions and separately detected, in particular for every one or a subgroup of the optical sensing fibres.

According to an embodiment of the present invention, the light combining system is configured, for every one of plural optical fibres for which one reference radiation portion but not two reference radiation portions are provided: to receive the respective backscatter light and the reference radiation portion, and provide the one mixing output radiation based on the respective backscatter light and the reference radiation portion; wherein the detection system is configured to detect the one mixing output radiation.

Thereby, non-polarisation-diverse coherent detection is provided or enabled for one or more optical sensing fibres.

According to an embodiment of the present invention, the one and/or the first and/or the second light combining system radiation output comprises: one or more (light combining system radiation output) components, in particular one, two or three components shifted in phase, which are detected separately, wherein for each component a light sensitive element is provided, in particular a photo diode.

When the respective light combining system radiation output(s) comprise one or more components, for example being different in phase or shifted in phase, efficient denoising and/or phase demodulation may be performed. For example, when three (two) components are output from the light combining system for one combined input, the signals may be shifted in phase by 120° (180°) with respect to each other.

According to an embodiment of the present invention, the system further comprises in particular for every of the one or more optical fibres: a fibre associated circulator, arranged in an injection radiation path between the modulator and the respective fibre; and/or arranged in a detection radiation path between the polarisation splitting device or the light combining system and the respective fibre.

The respective circulator may provide particular or distinctive optical communication between different input/output ports. The respective circulator may enable proper injection of the fibre input radiation portion into the fibre and may enable to guide the respective backscatter light to the light combining system and/or to the respective polarisation splitting device.

According to an embodiment of the present invention, the circulator is configured: to pass the respective fibre input radiation portion, which is in particular output from at least one modulator or a splitter downstream the modulator, to the respective fibre; and/or to pass the respective backscatter light returned from the respective fibre to the respective polarisation splitting device or to the light combining system.

Furthermore, the circulator may in particular prohibit to pass the respective fibre input radiation portion to the combining system or the respective polarisation splitting device. Further, the circulator may be configured to prohibit to pass the backscatter light returning from the optical fibre to the modulator or the primary radiation splitter. Thereby, an injection path and a detection path may properly be defined and separated from each other reducing disturbance.

According to an embodiment of the present invention, the combining system comprises, in particular for every of the one or more optical fibres: a light combining device, in particular 3×3, 2×3, 2×2, or 2×1 (e.g. fused fibre) coupler, for each polarisation component of the backscatter light or for the backscatter light, wherein the coupler is in particular configured: to receive the first polarisation component or the second polarisation component of the respective backscatter light at a first input port; to receive a first or a second reference radiation portion at a second input port; to combine the input radiations and output one or more light combining system radiation outputs at one or more output ports; or the light combining device is in particular configured: to receive the respective backscatter light at a first input port; to receive a reference radiation portion at the second input port; to combine the input radiations and output one or more light combining system radiation outputs at one or more output ports.

The light combining device may, for each of the one or more optical fibres, may be provided for each of the polarisation components of the respective backscatter light. The light combining system radiation outputs may be separately provided to the detection system which may be configured to separately detect for example the intensity of the light combining system radiation outputs. Thereby, the combining system may be implemented using conventionally available optical components.

The light combining device may either be a fused fibre optic coupler or may be implemented as an optical hybrid including more optical elements or photonics on chip, photonics integrated circuits (PIC), or including in and out coupling or light splitting with free beam optics.

According to an embodiment of the present invention, the system comprises a processor configured to determine, based on the detected one or more light combining system radiation outputs, at least one of the following: the optical phase and/or the optical frequency and/or amplitude or power to the backscattered light, and/or temporal change thereof, and/or strain and/or temperature and/or acoustic disturbance of the one or more fibres and/or temporal change thereof, in particular spatially resolved, the distributed sensing system in particular being configured as Distributed Acoustic Sensing system involving Rayleigh backscatter detection or Distributed Temperature or Strain Sensing system involving Brillouin backscatter detection.

The processor may communicatively be coupled to the detection system and may receive from the detection system signals indicating detected intensities of the one or more light combining system radiation outputs or components thereof. The signals may be analogue and/or digital signals. Analog signals may be converted to digital signals and digital signals may be processed by the processor. The processor may be configured to determine strain, temperature and/or acoustic disturbance of the fibre spatially and temporarily resolved.

It should be understood, that features, individually or in any combination, disclosed, described, explained or provided for a distributed sensing system may also, individually or in any combination, applied, provided or employed for a method of performing distributed sensing according to embodiments of the present invention and vice versa.

According to an embodiment of the present invention, a method of performing distributed sensing according to the independent method claim is provided. The method comprises providing a primary radiation; receiving, by a primary radiation splitter, the primary radiation at an input port and providing at least one injection radiation, a first reference radiation and a second reference radiation at at least three output ports; receiving, at one or more optical fibres, a respective fibre input radiation portion which is derived from the injection radiation; receiving, by a light combining system, in particular for every of the one or more optical fibres, backscatter light returning from the one or more optical fibres, or light derived from the backscatter light, receiving the first reference radiation or light derived from the first reference radiation, and in particular receiving the second reference radiation or light derived from the second reference radiation, as light combining system radiation inputs and providing one or more light combining system radiation outputs based on the light combining system radiation inputs; detecting the one or more light combining system radiation outputs, thereby providing coherent detection.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

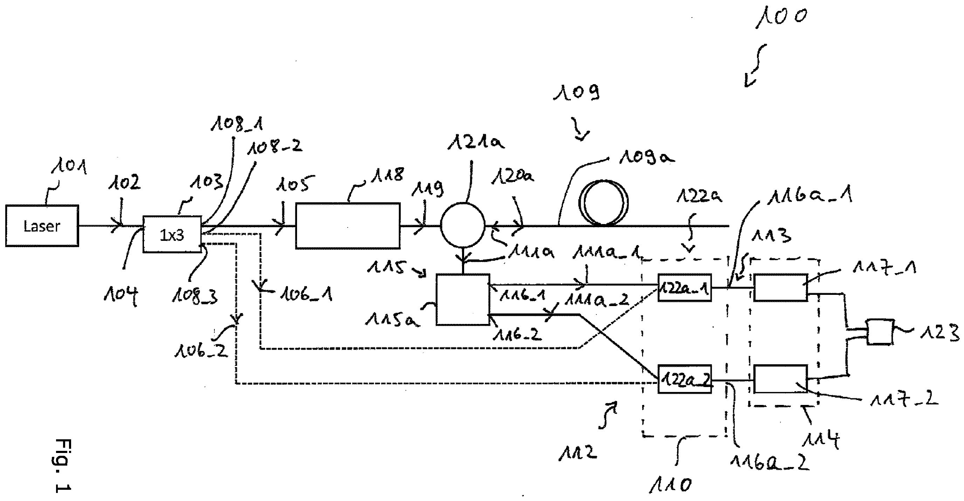

Figures 1 to 4 schematically illustrate distributed sensing systems according to different embodiments of the present invention. The distributed sensing systems are configured to perform or control a method of performing distributed sensing according to embodiments of the present invention.

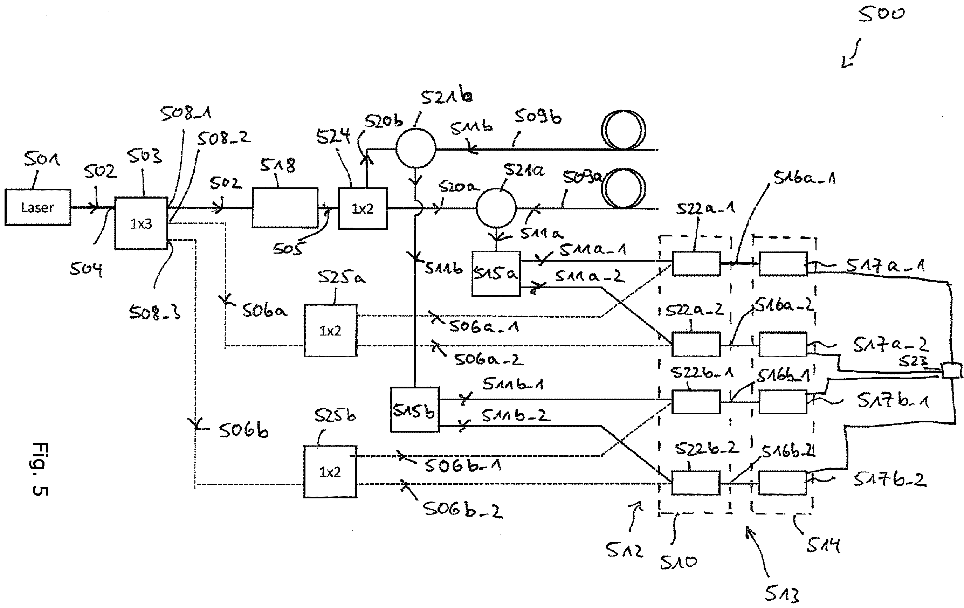

Figs. 5 to 8 illustrate distributed sensing systems according to embodiments of the present invention providing distributed sensing for plural optical fibres. The distributed sensing systems are configured to perform or control a method of performing distributed sensing according to embodiments of the present invention.

### Detailed Description

Elements or units or structures similar in the different figures are labelled with reference signs differing only in the first digit. The description of one element or unit or feature not described in one embodiment or figure may be taken from the description of this respective element or structure or feature described with respect to another embodiment or figure.

The distributed sensing system 100 schematically illustrated in **Fig. 1** comprises a light source 101, in particular laser source, for providing primary radiation 102. The light source 101 may for example be a narrow-line width laser, for example providing primary radiation 102 having a wavelength between 1000 and 1700 nm. Downstream the light source 101, the system 100 further comprises a primary radiation splitter 103 which is arranged to receive the primary radiation 102 at an input port 104 and to provide at least one injection radiation 105, a first reference radiation (or local oscillator radiation) 106_1 and a second reference radiation (second local oscillator radiation) 106_2 at at least three output ports 108_1, 108_2, 108_3. The primary radiation splitter 103 may for example be configured as a 1x3 (fused fibre) coupler for splitting the laser output or primary radiation 102 into three radiation portions output via the output ports 108_1, 108_2, 108_3.

The system 100 further comprises one or more optical fibres (collectively labelled with reference sign 109), which may be arranged close to an object to be monitored, wherein the illustrated embodiment comprises the optical fibre 109a. The one or more optical fibres 109 may be arranged close to or in proximity to one or more objects (such as a pipe, a cable, not illustrated) to be monitored for acoustic disturbance and/or temperature and/or strain. The optical fibres 109 may for example have a length of between 5 km and 50 km or more than 100 km.

The system 100 further comprises a light combining system 110 which is configured to receive backscatter light 111 or light 111_1, 111_2 which is derived from the backscatter light 111 which returns from the optical fibre 109a. The combining system 110 is further configured and arranged to receive the first reference radiation 106_1 and in particular also the second reference radiation 106_2 as light combining system radiation inputs 112 and provide one or more light combining system radiation outputs 113 based on the light combining system radiation inputs 112.

The system 100 further comprises a detection system 114 which is configured to detect the one or more light combining system radiation outputs 113.

The embodiment illustrated in Fig. 1 provides polarisation-diverse coherent detection for at least one sensing fibre 109a. Therefore, the embodiment 100 illustrated in Fig. 1 further comprises (in particular for every one of the one or more optical fibres 109) a respective polarisation splitting device 115, in particular for the optical fibre 109a a polarisation splitting device 115a which is arranged to receive the backscatter light 111a from the respective fibre 109a and to provide at least a first polarisation component 111a_1 and a second polarisation component 111a_2 of the respective backscatter light 111a at outputs 116a, 116a_2. The components 111a_1, 111a_2 may have for example polarisation directions which are perpendicular to each other. The polarisation splitting device 115a may be configured as a polarisation beam splitter (PBS) that splits the backscatter light into two signals with orthogonal polarisations (preferably having polarization-maintaining (PM) optical fibres connected at outputs). Depending on the input polarization all light may exit at or through one output pf the PBS, or the other, or mixed between both outputs.

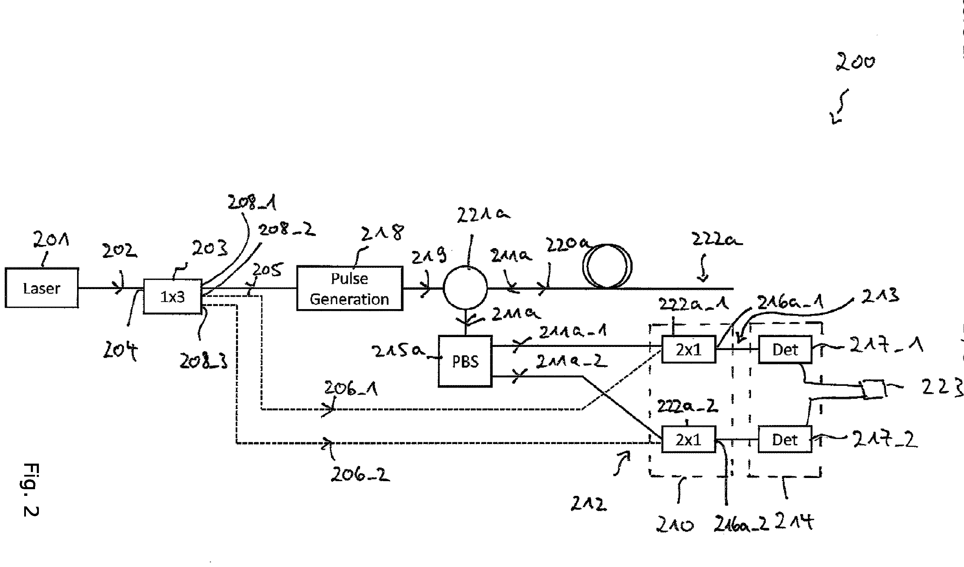

The embodiment illustrated in Fig. 1, similarly as the embodiments illustrated in Figs. 2 to 4, comprises exactly one optical fibre 109a. According to an embodiment of the present invention, the light combining system 110 is configured to receive the first polarisation component 111a_1 of the respective backscatter light 111a and to receive the first reference radiation 106_1 and to provide a first light combining system radiation output 116a_1 based on the inputs 111a_1, 106_1. Furthermore, the combining system 110 is configured to receive the second polarisation component 111a_2 of the respective backscatter 111a and to receive the second reference radiation 106_2 and to provide a second light combining system radiation output 116a_2 based on the inputs 111a_2, 106_2. Thereby, the detection system 114 is configured to detect the first light combining system radiation output 116a_1 and the second light combining system radiation output 116a_2 separately. For this purpose, the detection system 114 comprises the first detection component 117_1 and a second detection component 117_2 which each comprises one or more light sensitive elements.

The embodiment 100 of Fig. 1 further comprises at least one modulator 118 which is configured to receive one of the at least one injection radiation 105 and provide fibre input radiation 119. Thereby, the modulator 118 is configured to modulate the injection radiation with respect to at least one optical characteristics, as has been explained above. The respective fibre input radiation portion 120a (injected into the fibre 109a) is thereby derived from the fibre input radiation 119.

In the illustrated embodiments of Figs. 1 to 4, the respective fibre input radiation portions 120a substantially correspond to or are equal to the fibre input radiation 119, while in embodiments of multiple optical sensing fibres, the fibre input radiation 119 may be divided into plural equal power (or different power) in fibre input radiation portions.

The light combining system radiation outputs 116a_1, 116a_2 may comprise each one or more components, for example which are shifted in phase which are then detected separately by the detection components 117_1, 117_2.

The system 100 further comprises in particular for every one of the one or more optical fibres 109, a fibre associated circulator 121a which is arranged in an injection radiation path between the modulator 118 and the respective fibre 109a and/or which is arranged in a detection radiation path between the polarisation splitting device 115a (or the combining system 110) and the respective fibre 109a. The circulator 121a allows direction specific optical communication between different input/output ports. For example, the circulator 121a allows to pass the fibre input radiation 119 (as the respective fibre input radiation portion 120a), to the respective fibre 109a and/or to pass the respective backscatter light 111a returned from the respective fibre 109a to the respective polarisation splitting device 115a or to the light combining system 110.

The light combining system 110 comprises in the embodiment illustrated in Fig. 1 for every one of the one or more optical fibres and for each polarisation component of the backscatter light or for the backscatter light, a respective light combining device 122a (in particular 122a_1, 122a_2). The light combining device 122a_1 is configured to receive the first polarisation component 111a_1 of the backscatter light 111a and the first reference radiation portion 106_1 and is configured to combine the input radiations and output the first light combining system radiation output 116a_1. The light combining device 122a_2 performs a similar function based on the second polarisation component 111a_2 and the second reference radiation portion 106_2 to provide the second combining system radiation output 116a_2.

In case of non-polarisation-diverse detection, only one light combining device may be provided for each of the optical fibres 109 which is then configured to combine the respective backscatter light with a reference radiation portion.

The embodiment 100 illustrated in Fig. 1 further comprises a processor or in general processing system 123 which receives from the detection system 114 signals indicating the intensities of the detected light combining system radiation outputs 113 and is configured to determine strain and/or temperature and/or acoustic disturbance of the one or more optical fibres (see the description of the processor above).

**Fig. 2** schematically illustrates a distributed sensing system 200 according to another embodiment of the present invention which has similarities with the system 100 illustrated in Fig. 1. In the embodiment illustrated in Fig. 2, the light combining devices 222a_1, 222a_2 are both configured or comprise a 2×1 (e.g. fused) fibre coupler each having two inputs and having one output. Thereby, the first and second polarisation components 211a_1, 211a_2 of the backscatter light 211a are separately combined with the first and second reference radiation portion 206_1, 206_2 and combined lights are output as light signals 216a_1, 216a_2 each having only one component. The respective outputs 216a_1, 216a_2 are separately detected by two detection components 217_1, 217_2.

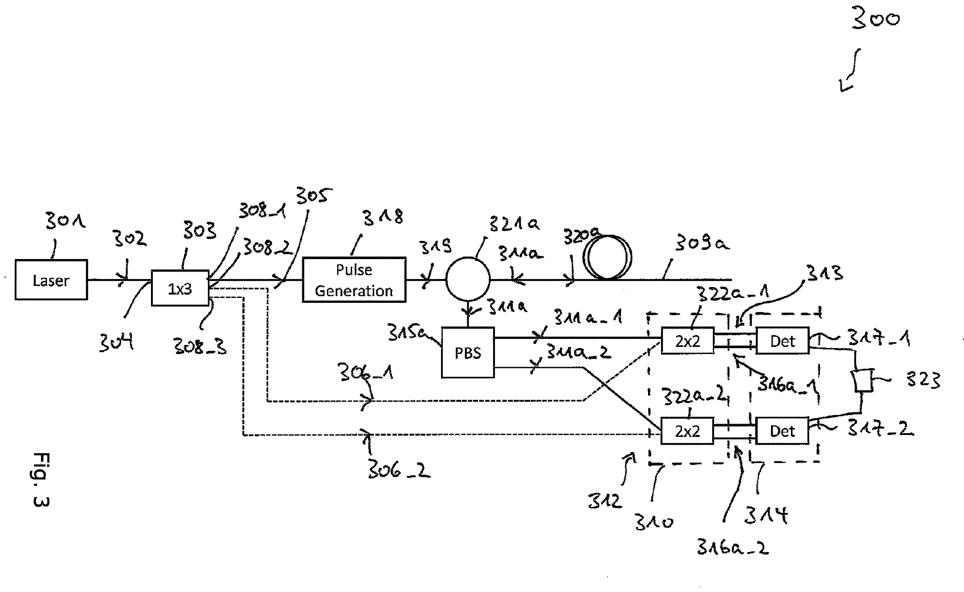

In the distributed sensing system 300 according to an embodiment of the present invention illustrated in **Fig. 3****,** the respective light combining devices 322a_1, 322a_2 are configured or comprise each a 2x2 (e.g. fused) fibre coupler having two inputs and two outputs each. Thereby, the first/second polarisation component 311a_1, 311a_2 are respectively combined with the first/second reference radiation portion 306_1, 306_2 and the combined outputs 316a_1 and 316a_2 each comprise two components, in particular components which are shifted in phase which are supplied to the detection components 317_1, 317_2. Herein, the detection components 317_1, 317_2 detect the two components of each of the outputs 316a_1, 316a_2 separately. The detection components 317_1, 317_2 could especially be balanced photodiodes which may rely on the two phase-shifted outputs of the 2x2 couplers.

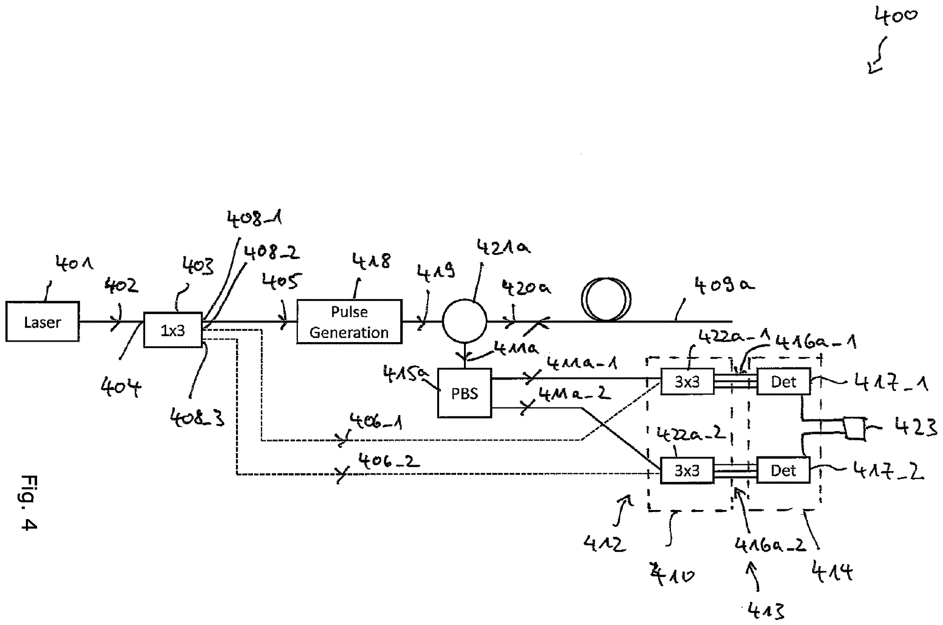

The distributed sensing system 400 according to an embodiment of the present invention illustrated in **Fig. 4** has also similarities to the systems 100, 200, 300 illustrated in Figs. 1 to 3. However, in the system 400, the light combining devices 422a_1, 422a_2 comprise a 3x3 (e.g. fused) fibre coupler each having two inputs and three outputs. Thereby, the light combining devices 422a_1/422a_2 receive each the first/second polarisation component 411a_1, 411a_2 from the backscatter light 411 and the respective first/second reference radiation portion 406_1, 406_2 and combine the respective two inputs. The light combining system radiation outputs 416a_1, 416a_2 thereby each comprise three components, which are phase-shifted, e.g. by 120°, relative to each other. The separate three components of each of the light combining system radiation outputs 416a_1, 416a_2 are separately provided to detection portions 417_1, 417_2 and are detected separately in a component-wise manner.

The embodiment 500 of a distributed sensing system illustrated in **Fig. 5** has similarities to the single optical fibre distributed sensing system illustrated in Figs. 1 to 4 while having additional elements or features. In particular, the system 500 illustrated in Fig. 5 comprises a fibre input radiation splitter 524, which is in the present or illustrated embodiment configured as a 1x2 (e.g. fused) fibre splitter or fibre coupler. In general, the fibre input radiation splitter 524 may be configured as a 1xN splitter for for example N optical fibres. The fibre input radiation splitter 524 is configured to receive at an input port fibre input radiation 505, in particular which is provided by the modulator 518. The fibre input radiation splitter 524 splits or divides the fibre input radiation 505 and outputs for the plural optical fibres 509a, 509b plural optical or respective fibre input radiation portions 520a, 520b. These fibre input radiation portions 520a, 520b pass respective circulators 521a, 521b in order to be injected into the respective optical fibres 509a, 509b.

In other embodiments, more than two optical sensing fibres may be provided and the respective fibre input radiation splitter 524 may then be configured or selected to provide the respective fibre input radiation portion to each of the plural optical sensing fibres.

The system 500 illustrated in Fig. 5 enables or provides polarisation-diverse coherent detection for two optical fibres 509a, 509b. In order to provide respective reference radiation portions 506a_1, 506a_2 for the first optical fibre 509a in order to provide the reference radiation portions 506b_1 and 506b_2 for the second optical fibre 509b, the system 500 comprises downstream the primary radiation splitter 503 - which is configured as a 1x3 (e.g. fused) fibre coupler or splitter - two 1x2 (e.g. fused) fibre splitters or couplers 525a, 525b which receive the respective reference radiation portions 506a, 506b (output by the primary radiation splitter 503) and divide or split the input radiations and output the portions 506a_1, 506a_2 and the portions 506b_1, 506b_2 and provide them or supply them to the combining system 510.

The light combining system 510 is configured, for every one of the plural optical fibres 509a, 509b for which a first reference portion 506a_1, 506b_1 and a second reference radiation portion 506a_2, 506b_2 are provided: to receive the first polarisation component 511a_1, 511b_1 and the first reference radiation portion 506a_1, 506b_1 and to provide a first light combining system output 516a_1, 516b_1 based on the inputs. In analogy, also respective light combining system output 516a_2 and 516b_2 is provided by the combining system 511 and applied to the detection system 514, in particular separately to detection components 517b_1, 517b_2, 517a_1, 517a_2.

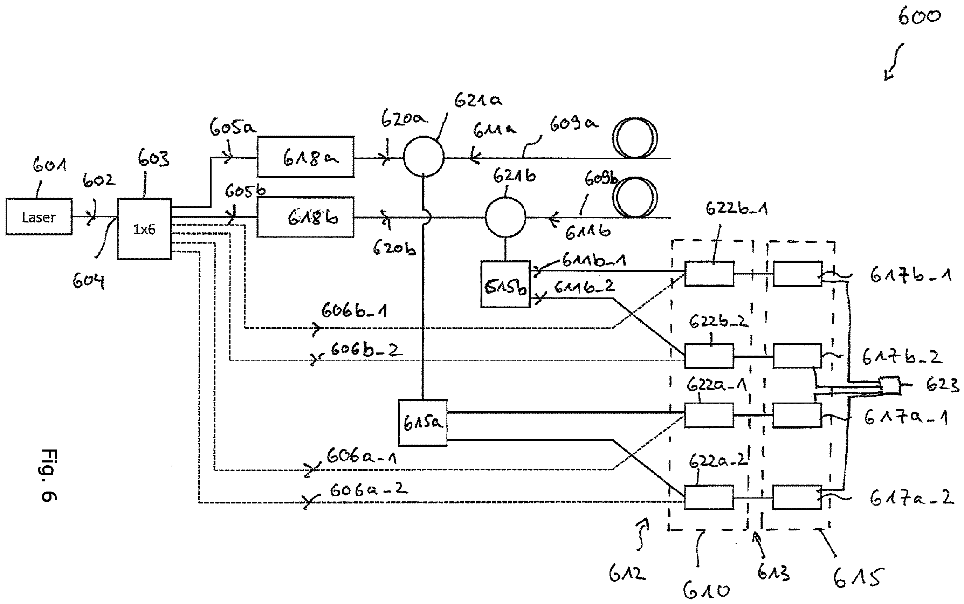

**Fig. 6** schematically illustrates a distributed sensing system 600 according to an embodiment of the present invention providing polarisation-diverse coherent detection for two optical sensing fibres 609a, 609b. Different from the embodiment 500 illustrated in Fig. 5, the system 600 comprises for each optical sensing fibre 509a, 509b a respective modulator 618a, 618b arranged upstream the respective optical fibre 609a, 609b. Further, the primary radiation splitter 603 (e.g. fused 1x6 fibre coupler) is configured to provide at six output ports respective reference radiation portions or injection radiations.

The primary radiation splitter 603 provides for the first optical fibre 609a a first injection radiation 605a which is supplied to the first modulator 618a which modulates the first injection radiation 605a to output a first fibre input radiation portion 620a which is passed via or over the first circulator 621a and is injected into the first fibre 609a. The primary radiation splitter 603 further outputs a second injection radiation 605b for the second optical fibre 609b which second injection radiation 605b is supplied to the second modulator 618b which outputs the respective fibre input radiation portion 620b. Via the second circulator 621b, this second fibre input radiation portion 620b is injected into the second fibre 609b.

Differently from the system 500 illustrated in Fig. 5, the primary radiation splitter 603 also outputs the respective first and second reference radiation portions 606a_1, 606a_2 and 606b_1, 606b_2 which are provided or supplied to the combining system 610 for the first and second optical fibre, respectively. Similarly, the reference radiation portions 606a_1 and 606a_2 as well as 606b_1 and 606b_2 are output by the primary radiation splitter 603 and supplied to the combining system 610 for the first or second optical fibre 609a, 609b. Thereby, the 1x2 splitters 525_1, 525_2 as provided in the embodiment 500 of Fig. 5 may be discarded. Thus, in the embodiment 600 illustrated in Fig. 6, the primary radiation splitter 603 has many output ports in order to provide for each optical fibre one reference radiation portion or a first reference radiation portion and a second reference radiation portion as well as at least one injection radiation.

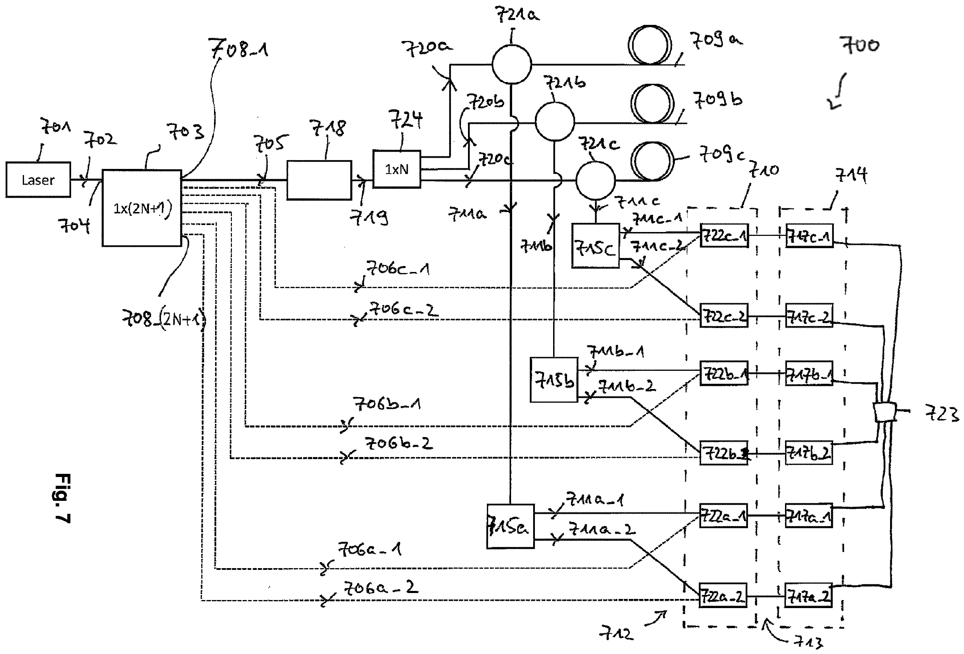

The distributed sensing system 700 illustrated in a schematic manner in **Fig. 7** provides polarisation-diverse coherent detection for N optical sensing fibres, in the present case the three fibres 709a, 709b, 709c. The primary radiation splitter 703 has one input port and 2xN+1 output ports. Thereby, for every of the N fibres, two reference radiation portions are provided which are combined in the combining system 710 with respective two different polarisation components of the respective backscatter light. Additionally, the primary radiation splitter 703 provides the one injection radiation 705 which is supplied to a modulator 718 which outputs fibre input radiation 719. The fibre input radiation splitter 724 has in the illustrated embodiment one input port and N output ports and may for example be configured as an 1xN (fused) coupler or splitter. Thereby, the respective fibre input radiation portions 720a, 720b, 720c for the respective sensing fibres 709a, 709b, 709c are output and supplied to the respective fibres.

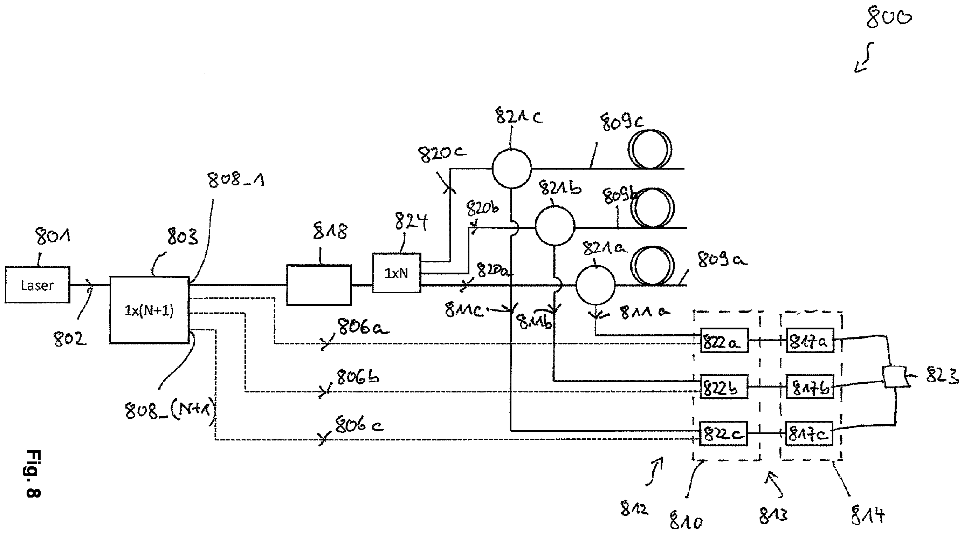

The distributed sensing system 800 schematically illustrated in **Fig. 8** provides coherent detection and non-polarisation-diverse detection for plural optical sensing fibres 809a, 809b, 809c, wherein the number of fibres may be any number N being a natural number. In the embodiment 800 illustrated in Fig. 8, the primary radiation splitter 803 has one input and N+1 outputs for providing for each of the optical fibres 809a, 809b, 809c a respective reference radiation portion 806a, 806b, 806c. The respective reference radiation portions 806a, 806b, 806c are combined in the combining system 810 with the respective backscatter light 811a, 811b, 811c and the respective combined outputs are supplied to the detection system 814 which separately detects the combined outputs from the different fibres.

Downstream the one modulator 818, the system 800 comprises a fibre input radiation splitter 824 which may have one input and N outputs, in order to output for every optical fibre 809a, 809b, 809c respective fibre input radiation portion 820a, 820b, 820c.

Embodiments of the present invention support COTDR (coherent optical time-domain reflectometry) or BOTDR (Brillouin OTDR). Other embodiments may support DAS (distributed acoustic sensing) or DTS (distributed temperature sensing) or DSS (distributed strain sensing) for one or multiple optical fibres. Embodiments of the present invention may support detection, in particular coherent detection, of two or more differently polarized signals from each backscatter light. The processor may be configured to receive digital signals or to perform a conversion of analogue signals to digital signals.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. Distributed sensing system (100), comprising:
a light source (101), in particular Laser source, for providing a primary radiation (102);
a primary radiation splitter (103) arranged to receive the primary radiation (102) at an input port (104) and provide at least one injection radiation (105), a first reference radiation (106_1) and a second reference radiation (106_2) at at least three output ports (108_1, 108_2, 108_3);
one or more optical fibres (109, 109a) arrangeable to receive a respective fibre input radiation portion (120a) which is derived from the injection radiation (105);
a light combining system (110) configured, in particular for every one of the one or more optical fibres (109), to receive backscatter light (111a) returned from the one or more optical fibres, or light (111a_1, 111a_2) derived from the backscatter light (111a), to receive the first reference radiation (106_1) or light derived from the first reference radiation, and in particular to receive the second reference radiation (106_2) or light derived from the second reference radiation, as light combining system radiation inputs (112) and provide one or more light combining system radiation outputs (113) based on the light combining system radiation inputs;
a detection system (114) configured to detect the one or more light combining system radiation outputs (113), thereby providing coherent detection.

2. Distributed sensing system according to the preceding claim, further comprising, in particular for at least one or for every one of the one or more optical fibres:
a respective polarisation splitting device (115a) arranged to receive the backscatter light (111a) from the respective fibre and to provide at least a first polarisation component (111a_1) and a second polarisation component (111a_2) of the respective backscatter light at outputs for light combining system radiation inputs (112).

3. Distributed sensing system according to the preceding claim, wherein the light combining system (110) is configured, in particular in case the system comprises exactly one optical fibre (109a):
to receive the first polarisation component (111a_1) of the respective backscatter light (111a) and the first reference radiation (106_1), and provide a first light combining system radiation output (116a_1) based on the first polarisation component of the respective backscatter light and the first reference radiation;
to receive the second polarisation component (111a_2) of the respective backscatter light (111a) and the second reference radiation (106_2), and provide a second light combining system radiation output (116a_2) based on the second polarisation component of the respective backscatter light and the second reference radiation;
wherein the detection system (110) is configured to detect the first light combining system radiation output and the second light combining system radiation output separately.

4. Distributed sensing system according to one of the preceding claims, further comprising at least one modulator (118) configured to receive one of the at least one injection radiation (105) and provide fibre input radiation (119), the modulator in particular being configured to modulate the injection radiation with respect to amplitude and/or frequency and/or phase and/or forming a pulse pattern and/or forming temporary intensity and/or phase and/or frequency and/or polarization profile, in order to obtain the fibre input radiation,
wherein for at least one or for every fibre the respective fibre input radiation portion (120a) is derived from the fibre input radiation (119).

5. Distributed sensing system according to one of the preceding claims, further comprising, in particular in case the system comprises plural optical fibres:
a fibre input radiation splitter (524), in particular 1xN splitter for N fibres, configured to receive the fibre input radiation (505) and to output for the plural optical fibres a respective fibre input radiation portion (520a,b).

6. Distributed sensing system according to one of the preceding claims,
wherein the primary radiation splitter (603) has as many output ports in order to provide for at least one or for every fibre one reference radiation portion or a first reference radiation portion (606a_1, 606b_1) and a second reference radiation portion (606a_2, 606b_2) and at least one injection radiation, and/or
wherein the primary radiation splitter comprises a 1×M coupler, wherein M >= 3.

7. Distributed sensing system according to one of the preceding claims, further comprising:
one or more further primary radiation splitters (525_1, 525_2), in particular 1x2 splitters, arranged downstream or upstream the primary radiation splitter (503) in one or more stages or in a cascade receiving input from or providing input to the primary radiation splitter, thereby providing a primary radiation splitting system having as many output ports in order to provide for every fibre one reference radiation portion or a first reference radiation portion and a second reference radiation portion as light combining system radiation inputs and to provide at least one injection radiation (502).

8. Distributed sensing system according to one of the preceding claims,
wherein the light combining system (501) is configured, for every one of plural optical fibres (509a, 509b) for which a first reference radiation portion and a second reference radiation portion are provided:
to receive the first polarisation component (511a_1) of the respective backscatter light (511a) and the first reference radiation portion (506a_1), and provide a first light combining system radiation output (516a_1) based on the first polarisation component and the first reference radiation portion;
to receive the second polarisation component (511a_2) of the respective backscatter light and the second reference radiation portion (506a_2), and provide a second light combining system radiation output (516a_2) based on the second polarisation component and the second reference radiation portion;
wherein the detection system is configured to detect the first light combining system radiation output and the second light combining system radiation output separately.

9. Distributed sensing system according to one of the preceding claims,
wherein the light combining system (810) is configured, for every one of plural optical fibres (809a,b,c) for which one reference radiation portion but not two reference radiation portions are provided:
to receive the respective backscatter light (811a) and the reference radiation portion (806a), and provide the one combining system output radiation based on the respective backscatter light and the reference radiation portion;
wherein the detection system is configured to detect the one combining system output radiation.

10. Distributed sensing system according to one of the preceding claims, wherein the one and/or the first and/or the second light combining system radiation output (113) comprises:
one or more components, in particular one, two or three components shifted in phase, which are detected separately, wherein for each component a light sensitive element is provided, in particular a photo diode.

11. Distributed sensing system according to one of the preceding claims, further comprising, in particular for every of the one or more optical fibres:
a fibre associated circulator (121a),
arranged in an injection radiation path between the modulator (118) and the respective fibre (109a); and/or
arranged in a detection radiation path between the polarisation splitting device (115a) or the light combining system (110) and the respective fibre (109a).

12. Distributed sensing system according to one of the preceding claims, wherein the circulator (121a) is configured:
to pass the respective fibre input radiation portion (120a), which is in particular output from at least one modulator or a splitter downstream the modulator, to the respective fibre (109a); and/or
to pass the respective backscatter light (111a) returned from the respective fibre to the respective polarisation splitting device (115a) or to the light combining system (110).

13. Distributed sensing system according to one of the preceding claims, wherein the combining system comprises, in particular for every of the one or more optical fibres:
a light combining device (122a_1, 122a_2), in particular 3x3, 2x3, 2x2, or 2x1 coupler, for each polarisation component of the backscatter light or for the backscatter light,
wherein the light combining device (122a_1, 122a_2) is in particular configured:
to receive the first polarisation component (111a_1) or the second polarization component (111a_2) of the respective backscatter light (111a) at a first input port;
to receive a first or a second reference radiation portion (106_1, 106_2) at a second input port;
to combine the input radiations and output one or more light combining system radiation outputs (116a_1, 116a_2) at one or more output ports;
or the light combining device is in particular configured:
to receive the respective backscatter light at a first input port;
to receive a reference radiation portion at the second input port;
to combine the input radiations and output one or more light combining system radiation outputs at one or more output ports.

14. Distributed sensing system according to one of the preceding claims, further comprising:
a processor (123) configured to determine, based one or more light combining system radiation outputs (113) as detected by the detection system (114), at least one of the following:
strain and/or temperature and/or acoustic disturbance of the one or more fibres and/or temporal change thereof, in particular spatially resolved, the distributed sensing system in particular being configured as Distributed Temperature or Acoustic or Strain Sensing system involving Rayleigh backscatter detection or Distributed Temperature or Strain Sensing system involving Brillouin backscatter detection.

15. Method of performing distributed sensing, comprising:
providing a primary radiation (102);
receiving, by a primary radiation splitter (103), the primary radiation (102) at an input port (104) and providing at least one injection radiation (105), a first reference radiation (106_1) and a second reference radiation (106_2) at at least three output ports (108_1, 108_2, 108_3);
receiving, at one or more optical fibres, a respective fibre input radiation portion (120a) which is derived from the injection radiation (105);
receiving, by a light combining system (110), in particular for every of the one or more optical fibres (109a), backscatter light (111a) returning from the one or more optical fibres, or light (111a_1, 111a_2) derived from the backscatter light, receiving the first reference radiation (106_1) or light derived from the first reference radiation, and in particular receiving the second reference radiation (106_2) or light derived from the second reference radiation, as light combining system radiation inputs (112) and providing one or more light combining system radiation outputs (113) based on the light combining system radiation inputs;
detecting the one or more light combining system radiation outputs (113), thereby providing coherent detection.

## Amended claims

### Amended claims in accordance with Rule 137(2) EPC.

1. Distributed sensing system (100), comprising:
a light source (101), in particular Laser source, for providing a primary radiation (102);
a primary radiation splitter (103) arranged to receive the primary radiation (102) at an input port (104) and provide at least one injection radiation (105), a first reference radiation (106_1) and a second reference radiation (106_2) at at least three output ports (108_1, 108_2, 108_3);
one or more optical fibres (109, 109a) arrangeable to receive a respective fibre input radiation portion (120a) which is derived from the injection radiation (105);
a light combining system (110) configured, in particular for every one of the one or more optical fibres (109), to receive backscatter light (111a) returned from the one or more optical fibres, or light (111a_1, 111a_2) derived from the backscatter light (111a), to receive the first reference radiation (106_1) or light derived from the first reference radiation, and to receive the second reference radiation (106_2) or light derived from the second reference radiation, as light combining system radiation inputs (112) and provide one or more light combining system radiation outputs (113) based on the light combining system radiation inputs;
a detection system (114) configured to detect the one or more light combining system radiation outputs (113), thereby providing coherent detection,
the distributed sensing system further comprising, in particular for at least one or for every one of the one or more optical fibres:
a respective polarisation splitting device (115a) arranged to receive the backscatter light (111a) from the respective fibre and to provide at least a first polarisation component (111a_1) and a second polarisation component (111a_2) of the respective backscatter light at outputs for light combining system radiation inputs (112),
wherein the light combining system (110) is configured in case the system comprises exactly one optical fibre (109a):
to receive the first polarisation component (111a_1) of the respective backscatter light (111a) and the first reference radiation (106_1), and provide a first light combining system radiation output (116a_1) based on the first polarisation component of the respective backscatter light and the first reference radiation;
to receive the second polarisation component (111a_2) of the respective backscatter light (111a) and the second reference radiation (106_2), and provide a second light combining system radiation output (116a_2) based on the second polarisation component of the respective backscatter light and the second reference radiation;
wherein the detection system (110) is configured to detect the first light combining system radiation output and the second light combining system radiation output separately,
or
wherein the light combining system (501) is configured, for every one of plural optical fibres (509a, 509b) for which a first reference radiation portion and a second reference radiation portion are provided:
to receive the first polarisation component (511a_1) of the respective backscatter light (511a) and the first reference radiation portion (506a_1), and provide a first light combining system radiation output (516a_1) based on the first polarisation component and the first reference radiation portion;
to receive the second polarisation component (511a_2) of the respective backscatter light and the second reference radiation portion (506a_2), and provide a second light combining system radiation output (516a_2) based on the second polarisation component and the second reference radiation portion;
wherein the detection system is configured to detect the first light combining system radiation output and the second light combining system radiation output separately.

2. Distributed sensing system (100), comprising:
a light source (101), in particular Laser source, for providing a primary radiation (102);
a primary radiation splitter (103) arranged to receive the primary radiation (102) at an input port (104) and provide at least one injection radiation (105), a first reference radiation (106_1) and a second reference radiation (106_2) at at least three output ports (108_1, 108_2, 108_3);
one or more optical fibres (109, 109a) arrangeable to receive a respective fibre input radiation portion (120a) which is derived from the injection radiation (105);
a light combining system (110) configured, in particular for every one of the one or more optical fibres (109), to receive backscatter light (111a) returned from the one or more optical fibres, to receive the first reference radiation (106_1) or light derived from the first reference radiation, and to receive the second reference radiation (106_2) or light derived from the second reference radiation as light combining system radiation inputs (112) and provide one or more light combining system radiation outputs (113) based on the light combining system radiation inputs;
a detection system (114) configured to detect the one or more light combining system radiation outputs (113), thereby providing coherent detection, wherein the light combining system (810) is configured, for every one of plural optical fibres (809a,b,c) for which one reference radiation portion but not two reference radiation portions are provided:
to receive the respective backscatter light (811a) and the reference radiation portion (806a), and provide the one combining system output radiation based on the respective backscatter light and the reference radiation portion;
wherein the detection system is configured to detect the one combining system output radiation.

3. Distributed sensing system according to one of the preceding claims, further comprising at least one modulator (118) configured to receive one of the at least one injection radiation (105) and provide fibre input radiation (119), the modulator in particular being configured to modulate the injection radiation with respect to amplitude and/or frequency and/or phase and/or forming a pulse pattern and/or forming temporary intensity and/or phase and/or frequency and/or polarization profile, in order to obtain the fibre input radiation,
wherein for at least one or for every fibre the respective fibre input radiation portion (120a) is derived from the fibre input radiation (119).

4. Distributed sensing system according to one of the preceding claims, further comprising, in particular in case the system comprises plural optical fibres:
a fibre input radiation splitter (524), in particular 1xN splitter for N fibres, configured to receive the fibre input radiation (505) and to output for the plural optical fibres a respective fibre input radiation portion (520a,b).

5. Distributed sensing system according to one of the preceding claims,
wherein the primary radiation splitter (603) has as many output ports in order to provide for at least one or for every fibre one reference radiation portion or a first reference radiation portion (606a_1, 606b_1) and a second reference radiation portion (606a_2, 606b_2) and at least one injection radiation, and/or
wherein the primary radiation splitter comprises a 1xM coupler, wherein M >= 3.

6. Distributed sensing system according to one of the preceding claims, further comprising:
one or more further primary radiation splitters (525_1, 525_2), in particular 1x2 splitters, arranged downstream or upstream the primary radiation splitter (503) in one or more stages or in a cascade receiving input from or providing input to the primary radiation splitter, thereby providing a primary radiation splitting system having as many output ports in order to provide for every fibre one reference radiation portion or a first reference radiation portion and a second reference radiation portion as light combining system radiation inputs and to provide at least one injection radiation (502).

7. Distributed sensing system according to one of the preceding claims, wherein the one and/or the first and/or the second light combining system radiation output (113) comprises:
one or more components, in particular one, two or three components shifted in phase, which are detected separately, wherein for each component a light sensitive element is provided, in particular a photo diode.

8. Distributed sensing system according to one of the preceding claims, further comprising, in particular for every of the one or more optical fibres:
a fibre associated circulator (121a),
arranged in an injection radiation path between the modulator (118) and the respective fibre (109a); and/or
arranged in a detection radiation path between the polarisation splitting device (115a) or the light combining system (110) and the respective fibre (109a).

9. Distributed sensing system according to the preceding claim, wherein the circulator (121a) is configured:
to pass the respective fibre input radiation portion (120a), which is in particular output from at least one modulator or a splitter downstream the modulator, to the respective fibre (109a); and/or
to pass the respective backscatter light (111a) returned from the respective fibre to the respective polarisation splitting device (115a) or to the light combining system (110).

10. Distributed sensing system according to one of the preceding claims, wherein the combining system comprises, in particular for every of the one or more optical fibres:
a light combining device (122a_1, 122a_2), in particular 3x3, 2x3, 2x2, or 2x1 coupler, for each polarisation component of the backscatter light or for the backscatter light,
wherein the light combining device (122a_1, 122a_2) is in particular configured:
to receive the first polarisation component (111a_1) or the second polarization component (111a_2) of the respective backscatter light (111a) at a first input port;
to receive a first or a second reference radiation portion (106_1, 106_2) at a second input port;
to combine the input radiations and output one or more light combining system radiation outputs (116a_1, 116a_2) at one or more output ports;
or the light combining device is in particular configured:
to receive the respective backscatter light at a first input port;
to receive a reference radiation portion at the second input port;
to combine the input radiations and output one or more light combining system radiation outputs at one or more output ports.

11. Distributed sensing system according to one of the preceding claims, further comprising:
a processor (123) configured to determine, based one or more light combining system radiation outputs (113) as detected by the detection system (114), at least one of the following:
strain and/or temperature and/or acoustic disturbance of the one or more fibres and/or temporal change thereof, in particular spatially resolved, the distributed sensing system in particular being configured as Distributed Temperature or Acoustic or Strain Sensing system involving Rayleigh backscatter detection or Distributed Temperature or Strain Sensing system involving Brillouin backscatter detection.

12. Method of performing distributed sensing by a distributed sensing system, the method comprising:
providing a primary radiation (102);
receiving, by a primary radiation splitter (103), the primary radiation (102) at an input port (104) and providing at least one injection radiation (105), a first reference radiation (106_1) and a second reference radiation (106_2) at at least three output ports (108_1, 108_2, 108_3);
receiving, at one or more optical fibres, a respective fibre input radiation portion (120a) which is derived from the injection radiation (105);
receiving, by a light combining system (110), in particular for every of the one or more optical fibres (109a), backscatter light (111a) returning from the one or more optical fibres, or light (111a_1, 111a_2) derived from the backscatter light, receiving the first reference radiation (106_1) or light derived from the first reference radiation, and receiving the second reference radiation (106_2) or light derived from the second reference radiation, as light combining system radiation inputs (112) and providing one or more light combining system radiation outputs (113) based on the light combining system radiation inputs;
detecting, by a detection system, the one or more light combining system radiation outputs (113), thereby providing coherent detection,
the distributed sensing system comprising, in particular for at least one or for every one of the one or more optical fibres:
a respective polarisation splitting device (115a) arranged to receive the backscatter light (111a) from the respective fibre and to provide at least a first polarisation component (111a_1) and a second polarisation component (111a_2) of the respective backscatter light at outputs for light combining system radiation inputs (112),
wherein the light combining system (110) is configured in case the system comprises exactly one optical fibre (109a):
to receive the first polarisation component (111a_1) of the respective backscatter light (111a) and the first reference radiation (106_1), and provide a first light combining system radiation output (116a_1) based on the first polarisation component of the respective backscatter light and the first reference radiation;
to receive the second polarisation component (111a_2) of the respective backscatter light (111a) and the second reference radiation (106_2), and provide a second light combining system radiation output (116a_2) based on the second polarisation component of the respective backscatter light and the second reference radiation;
wherein the detection system (110) is configured to detect the first light combining system radiation output and the second light combining system radiation output separately,
or
wherein the light combining system (501) is configured, for every one of plural optical fibres (509a, 509b) for which a first reference radiation portion and a second reference radiation portion are provided:
to receive the first polarisation component (511a_1) of the respective backscatter light (511a) and the first reference radiation portion (506a_1), and provide a first light combining system radiation output (516a_1) based on the first polarisation component and the first reference radiation portion;
to receive the second polarisation component (511a_2) of the respective backscatter light and the second reference radiation portion (506a_2), and provide a second light combining system radiation output (516a_2) based on the second polarisation component and the second reference radiation portion;
wherein the detection system is configured to detect the first light combining system radiation output and the second light combining system radiation output separately.

13. Method of performing distributed sensing by a distributed sensing system, the method comprising:
providing a primary radiation (102);
receiving, by a primary radiation splitter (103), the primary radiation (102) at an input port (104) and providing at least one injection radiation (105), a first reference radiation (106_1) and a second reference radiation (106_2) at at least three output ports (108_1, 108_2, 108_3);
receiving, at one or more optical fibres, a respective fibre input radiation portion (120a) which is derived from the injection radiation (105);
receiving, by a light combining system (110), in particular for every of the one or more optical fibres (109a), backscatter light (111a) returning from the one or more optical fibres, or light (111a_1, 111a_2) derived from the backscatter light, receiving the first reference radiation (106_1) or light derived from the first reference radiation, and receiving the second reference radiation (106_2) or light derived from the second reference radiation, as light combining system radiation inputs (112) and providing one or more light combining system radiation outputs (113) based on the light combining system radiation inputs;
detecting, by a detection system, the one or more light combining system radiation outputs (113), thereby providing coherent detection,
wherein the light combining system (810) is configured, for every one of plural optical fibres (809a,b,c) for which one reference radiation portion but not two reference radiation portions are provided:
to receive the respective backscatter light (811a) and the reference radiation portion (806a), and provide the one combining system output radiation based on the respective backscatter light and the reference radiation portion;
wherein the detection system is configured to detect the one combining system output radiation.
